# FASCICULE DE BREVET EUROPEEN

(11) **EP 0 640 563 B1**
(45) Date de publication et mention de la délivrance du brevet: **08.09.1999**
(21) Numéro de dépôt: 94905885.3
(22) Date de dépôt: 01.02.1994
(51) Int. Cl.: C01B 31/06, B01J 3/08

(54) **SUBSTANCE CARBONEE ADAMANTINE ET SON PROCEDE DE PRODUCTION**
DIAMANTARTIGES, KOHLENSTOFFHALTIGES MATERIAL UND VERFAHREN ZU SEINER ERZEUGUNG
ADAMANTINE CARBONACEOUS SUBSTANCE AND METHOD OF PRODUCING THE SAME

(30) Priorité: 12.02.1993 RU 93003669
(43) Date de publication de la demande: 01.03.1995
(73) Titulaire: FEDERALNY NAUCHNO-PROIZVODSTVENNY TSENTR "ALTAI", Biisk, 659322 (RU)
(72) Inventeur: VERESCHAGIN, Alexandr Leonidovich, Biisk, 659322 (RU); PETROV, Evgeny Anatolievich, Biisk, 659302 (RU); SAKOVICH, Gennady Viktorovich, Biisk, 659322 (RU); KOMAROV, Vitaly Fedorovich, Biisk, 659322 (RU); KLIMOV, Anatoly Valentinovich, Biisk, 659302 (RU); KOZYREV, Nikolai Vladimirovich, Biisk, 659302 (RU)
(74) Mandataire: Hirsch, Marc-Roger
(86) Numéro de dépôt international: RU9400014
(87) Numéro de publication internationale: WO9418123

(56) Documents cités:
- WO-A-93/01129
- WO-A-93/13016
- FR-A- 2 491 775

## Description

La présente invention se rapporte au domaine de la chimie du carbone, et notamment à un matériau adamantin carboné (de diamant à base de carbone) contenant du carbone en variété cubique, en phase amorphe aux rayons X et en phase cristalline, ainsi qu'à son procédé d'obtention.

Lorsque l'on fait détoner des substances carbonées explosives présentant un équilibre d'oxygène négatif et dans des conditions permettant de conserver les produits carbonés condensés de l'explosion, il se forme des produits carbonés ultradispersés (poudres) présentant des propriétés spécifiques telles qu'un pouvoir réactionnel élevé et une dimension particulaire très réduite avec un niveau de défaut élevé des structures carbonées formées. L'ensemble de ces propriétés détermine les domaines d'utilisation pratique de ces produits dans des matériaux composites, en qualité d'additifs de modification.

Les propriétés des matériaux carbonés obtenus au moyen d'une énergie explosive sont connues d'une série de publications.

Dans la revue "Yokan Nomura and Kazuro Kawamura Carbon Vol. 22, n°2, pages 189 à 191 (1984)" sont décrites certaines propriétés du noir de carbone obtenu lors de la détonation du trinitrotoluène dans un appareil en acier au carbone (la composition de l'atmosphère n'est pas communiquée) . Selon les données de la microscopie électronique, cet échantillon consiste essentiellement en une phase amorphe aux rayons X de carbone non adamantin présentant des particules en 5 à 10 couches de carbone non planes et distribuées de façon aléatoire et, de ce fait, la formation de la phase graphite ne se produit pas. L'étude radiographique n'a laissé apparaître que la présence de l'image fortement élargie (002) du carbone. Les particules de carbone ont une forme non sphérique, à la différence des particules de noir de carbone formées au cours des processus de combustion.

Dans l'étude théorique de "Van Thiel, M. and Rec. F.H. J. Appl Phys., Vol. 62, pages 1761 à 1767 (1987)", sont étudiées certaines propriétés du noir de carbone formées à la suite de la détonation du trinitrotoluène. En vertu des calculs, les auteurs ont supposé que le carbone formé dans ces conditions présente un excès d'énergie de 1 à 2 Kcal/mole par rapport au graphite. Ces données permettent de supposer que les particules de carbone formées lors de la détonation présentent une dimension de l'ordre de 10 nm.

Le document de l'état de la technique le plus proche paraît constitué par l'article de "N. Roy Greiner, D.S. Phillips, J.D. Johnson and Fred Volk dans Nature, vol. 333, 2ème, Juin 1988, pages 440 à 442" dans lequel sont décrites certaines propriétés du carbone des produits de détonation d'une substance explosive constituée de trinitrotoluène (trotyle) et d'exogène selon une composition de 60/40 en % en poids, sous atmosphère d'argon à la pression atmosphérique. Selon ces données, les produits de détonation condensés consistent en carbone selon des variétés adamantines et non adamantines.

Les phases cristallines et amorphes aux rayons X du carbone sont constituées par des sphéroïdes compacts d'environ 7 nm de diamètre et par des bandes recourbées d'une épaisseur d'environ 4 nm. En spectrographie aux rayons X, la forme non adamantine du carbone se caractérise par une distance entre raies de 0,35 nm caractéristique pour l'image (002) du graphite complètement amorphe et orienté de façon aléatoire.

La phase adamantine du carbone est présente sous la forme de sphéroïdes compacts d'environ 7 nm de diamètre. Lors de l'étude par la méthode de diffraction des électrons, on a enregistré l'ensemble d'images entre raies suivant: d = 0,2058; 0,1266; 0,1075; 0,884; 0 et 0,636 nm qui correspondent aux plans de l'image (III), (220), (311) , (400) et (440) du diamant.

Pas un seul des éléments décrits ci-dessus n'a trouvé d'application industrielle.

On se propose de résoudre le problème technique de la création d'un matériau adamantin carboné présentant des propriétés combinées qui le rendent apte à être utilisé en qualité de matériau composant d'un matériau composite et présentant des caractéristiques améliorées ainsi que le problème du procédé d'obtention de ce matériau.

L'invention fournit un matériau adamantin carboné contenant du carbone en phases adamantine et amorphe aux rayons X, de l'hydrogène, de l'azote et de l'oxygène, caractérisé en ce qu'il contient en plus du carbone en phase cristalline avec les proportions suivantes des phases de carbone, en % en poids:

| | |
|---|---|
| phase adamantine | 30 à 75 |
| phase amorphe aux rayons X | 10 à 15 |
| phase cristalline | complément à 100% |

et avec les propositions quantitatives suivantes des éléments, en % en poids:

| | |
|---|---|
| carbone | 84-89 |
| hydrogène | 0,3-1,1 |
| azote | 3,1-4,3 |
| oxygène | 2,0-7,1 |
| impuretés incombustibles | 2,0-5,0 |

la surface contenant des groupes fonctionnels méthyliques, carboxyliques, quinoniques, lactoniques, éthers et aldéhydiques.

L'invention fournit encore un procédé d'obtention du matériau selon l'invention, comprenant la détonation d'un explosif présentant un équilibre d'oxygène négatif à l'intérieur d'un volume fermé et dans une atmosphère inerte par rapport au carbone, caractérisé en ce que l'on effectue la synthèse à une vitesse de refroidissement des produits de détonation de 200 à 6000 degrés/min.

On utilise habituellement à ces fins une substance explosive composée de trinitrotoluène (trotyle)/exogène (octogène) selon un rapport compris entre 50/50 jusqu'à 70/30. Le produit (matériau) selon l'invention se présente sous la forme d'une poudre noire de surface spécifique comprise entre 218 et 600 m²/g, d'un poids spécifique compris entre 2,2 et 2,8 g/cm³ et avec un taux d'humidité atteignant 4%. Le poids des échantillons est déterminé par la teneur en impuretés incombustibles, essentiellement constituées de fer. La teneur en impuretés incombustibles du produit selon l'invention varie dans des limites comprises entre 2 et 5%. Les impuretés incombustibles sont constituées de magnétite, de variété alpha du fer et de carbure de fer. Selon les données de la spectroscopie à résonance en rayons gamma, on trouve la distribution suivante des intensités dans le spectre: l'apport de la raie de la variété alpha du fer constitue 29 à 43%_{,} celui de la magnétite de 36 à 48%, et celui des ions de fer trivalents (représentés par le carbure de fer) est de 16 à 27%. La composition élémentaire du produit est la suivante (en % en poids):

| | |
|---|---|
| carbone | 84,0 à 89,0% |
| hydrogène | 0,3 à 1,1% |
| azote | 3,1 à 4,3% |
| oxygène (le complément) | 2,0 à 7,1% |

(la composition élémentaire était déterminée par une méthode standard de combustion de la chimie organique).

Les données concernant la distribution de l'azote et du carbone étaient obtenues par la spectroscopie photoélectronique aux rayons X. Il a été établi que dans l'échantillon initial, on trouve le rapport suivant entre les atomes d'oxygène et de carbone, et respectivement d'azote et de carbone: O/C = 0,030 à 0,040; N/C = 0,01 à 0,03. Après le décapage de la surface par des ions argon, ces rapports se sont modifiés: O/C = 0,017 à 0,020; N/C = 0,001 à 0,0005. Ceci indique la présence de groupes oxygénés et azotés, de préférence à la surface des particules.

Par extraction avec des solvants non polaires (tétrachlorure de carbone, éther, n-hexane et benzène), on a isolé la composante à bas poids moléculaire de la substance du matériau selon l'invention. Sa proportion en poids varie dans des limites comprises entre 0,36 et 1,13% et il se présente comme un mélange de composés organiques. Selon les données en spectroscopie infrarouge, on y a décelé la présence de groupes fonctionnels tels que les groupes OH, NH, CH₂-, CH₃-, CH et -C-O-C. Ces composés sont des produits de condensation des fragments stables des molécules dans l'onde de détonation.

L'information sur l'état de la surface était obtenue en utilisant les méthodes suivantes.

Selon les données de l'analyse en chromatographie gazeuse, avec un chauffage sous vide à 673°K pendant 2 heures, les gaz suivants se dégagent:

| | |
|---|---|
| méthane | 0,03 à 0,47 cm³/g |
| hydrogène | 0,03 à 0,30 cm³/g |
| dioxyde de carbone | 0,02 à 0,84 cm³/g |
| oxygène | 0,00 à 0,05 cm³/g |
| et azote | 0,20 à 1,83 cm³/g |

Le dégagement total de gaz varie dans des limites comprises entre 0,36 et 2,98 cm³/g.

Ces données indiquent que la surface du produit selon l'invention comprend les groupes méthyliques (à cause du dégagement de méthane) et les groupes carboxyliques (à cause du dégagement de CO₂).

Selon les données sur le dégagement de gaz des échantillons à des températures comprises entre 573 et 773°K, on a déterminé, pour la série de gaz, les énergies d'activation: pour le monoxyde de carbone 103,6 kJ/mole, pour le dioxyde de carbone - 23,4 kJ/mole, pour l'azote - 22,5 kJ/mole et pour le méthane - 47,6 kJ/mole. Les informations obtenues à partir de l'énergie d'activation indiquent que les gaz dégagés ne sont pas adsorbés par la surface et qu'ils se forment lors de la destruction de surfaces chimiquement liées à des groupes superficiels.

Selon les données de l'étude de polarisation, dans tous les échantillons étaient présents les groupes quinoniques, lactoniques, carboxyliques, aldéhydiques et éthers. Mais dans le produit selon l'invention prédominent les groupes méthyliques et, par conséquent, le matériau présente des propriétés hydrophobes. Cette situation détermine à son tour le domaine d'utilisation du matériau selon l'invention dans les matériaux composites renfermant des constituants non polaires, par exemple des élastomères, des polymères, des résines, des huiles. Un traitement chimique quelconque influence de façon sensible les propriétés superficielles de la substance selon l'invention, ainsi que la possibilité d'utilisation de celle-ci dans l'un ou l'autre matériau composite.

La distribution des formes de carbone dans la substance selon l'invention était établie par la spectroscopie en photographie électronique aux rayons X (SPEX).

Selon les données (SPEX), la raie CIs est représentée par un pic asymétrique large avec une demi-largeur à 4,1 eV qui, après bombardement par des ions argon, se réduit jusqu'à 2,5 eV et acquiert une forme caractéristique pour le graphite ou le carbone finement dispersé. La charge de la surface est égale à zéro, ce qui est caractéristique des conducteurs électriques. On peut supposer que le volume de l'échantillon est représenté par une phase de carbone non adamantin et par une phase de carbone adamantin, cette dernière étant alors distribuée sous forme particulaire.

L'information sur la composition de la phase du matériau selon l'invention était obtenue par l'analyse de phase aux rayons X.

Les diagrammes aux rayons X des échantillons étudiés en commun, avec les trois raies se rapportant à la phase adamantine du carbone, renferment l'image (002) du carbone et le maximum large à d = 0,418 nm se rapportant à la phase amorphe aux rayons X du carbone dont la présence est due aux conditions dans lesquelles est réalisée la synthèse (la présence du dernier maximum se manifeste très nettement après l'oxydation partielle de la substance par l'oxygène de l'air ou par un mélange d'acides oxydants).

Par la méthode de diffusion aux rayons X sous de petits angles, on a établi la distribution des particules du matériau selon l'invention. Comme cette courbe le montre, la distribution dimensionnelle des particules se caractérise par un maximum dans le domaine compris entre 40 et 50 Å. Selon ces données, les phases du carbone ne se séparent pas selon la dimension des particules.

L'étude du comportement des échantillons au cours d'un chauffage dans l'air atmosphérique a montré que sur la courbe DTA on observait un large effet exogène avec un maximum entre 683 et 773°K, ce qui témoigne d'une très grande homogénéité du matériau. Il n'apparaît ainsi pas possible de séparer le matériau sous forme adamantine du matériau sous forme non adamantine sans détruire l'une de ces formes.

A la suite des études réalisées, on peut supposer que le matériau selon l'invention présente la structure qui suit. Dans le centre de la particule est disposé un noyau adamantin ou de diamant entouré par la phase amorphe aux rayons X du carbone. La phase amorphe aux rayons X du carbone forme, au contact du noyau, une phase du diamant amorphe aux rayons X qui se convertit, en passant par la phase du carbone amorphe aux rayons X, en une phase cristalline du carbone. Sur la surface de la phase cristalline du carbone, se trouvent des groupes superficiels.

Le matériau adamantin carboné qui est proposé est obtenu par détonation d'une substance explosive à équilibre d'oxygène négatif dans un volume fermé et un milieu inerte par rapport au carbone, avec une vitesse de refroidissement des produits de détonation comprise entre 200 et 6000 degrés/minute dans une chambre de détonation ordinaire.

La température de détonation d'une composition toluène/hexane 60/40 est (en fonction de la méthode de calcul) de 3500 à 4000°K et, après la détonation, les produits sont refroidis jusqu'à 350°K.

Si l'on impose une vitesse de refroidissement de l'ordre de 7000 degrés/minute, il se forme dans ces conditions une phase du carbone contenant de 70 à 80% de phase cubique (diamant), mais pour obtenir une telle vitesse de refroidissement, il est nécessaire que le volume de la chambre de détonation soit d'environ 1 million de fois plus grand que le volume de la charge en substance explosive. Autrement dit, pour la détonation d'une charge de 1 kg de substance explosive présentant une composition toluène/hexane à 60/40, il est nécessaire de disposer d'une chambre de détonation présentant un volume de 500 m³, ce qui n'est pas rationnel sur le plan économique et technique, étant donné le très fort pourcentage de pertes du produit et la faible productivité du procédé de production de diamants.

Si par contre, on réduit la vitesse de refroidissement en-dessous de 200 degrés/minute, du fait de l'interaction avec le gaz carbonique et la vapeur d'eau, le matériau selon l'invention parvient à entrer en réaction avec ces derniers, en se transformant en CO.

Pour cette raison, il est nécessaire de prévoir une vitesse de refroidissement réalisable sur le plan technique et qui permette d'obtenir le rapport indispensable entre les phases du carbone et la composition déterminée des groupes superficiels. Toutes ces mesures permettent d'obtenir un matériau synthétique susceptible d'entrer dans la composition de matériaux composites à grande efficacité.

La vitesse de refroidissement est réglée pour obtenir différents régimes d'échappement des gaz et divers rapports entre les volumes des substances explosives et le volume de la chambre de détonation.

### EXEMPLE

Au commencement, pour créer l'atmosphère en produits gazeux de détonation nécessaire pour la conservation du matériau adamantin carboné, on fait détoner une charge de substances explosives de 0,65 kg constituée de trinitrotoluène (trotyle) et d'exogène dans le rapport 60/40 dans une chambre de détonation de 3 m³ de volume. Ensuite, on y fait détonner la même charge de substances explosives. Après la dilatation des produits de détonation et le rétablissement de l'équilibre thermique, on laisse le mélange gazeux s'écouler hors de la chambre par une tuyère supersonique de 15 mm de section pendant 40 secondes. Compte tenu du dégagement de chaleur absorbé par les parois de la chambre et du balayage par le gaz de travail, la vitesse de refroidissement du mélange atteint 304 degrés/minute. Les produits condensés formés sont captés dans des cyclones et analysés sans épuration supplémentaire quelconque.

Lors de l'étude de la poudre restante après détonation, on a obtenu les données suivantes qui sont regroupées dans le tableau I.

On détermine par un procédé de polarisation la composition des groupes fonctionnels superficiels contenant de l'oxygène. D'après la valeur des potentiels de réduction, on a identifié les groupes carboxyliques, quinoniques, lactoniques, éthers, aldéhydiques et, selon la composition des gaz dégagés lors du chauffage (en cas de dégagement de méthane), méthyliques.
Les exemples de réalisation du processus selon les rapports proposés pour le procédé selon l'invention sont présentés sur le tableau 1. Dans ce tableau, sont également inclus des exemples de comparaison correspondant à des conditions de mise en oeuvre du procédé qui sont différentes de celles selon l'invention, afin de permettre de comparer les propriétés des produits obtenus.

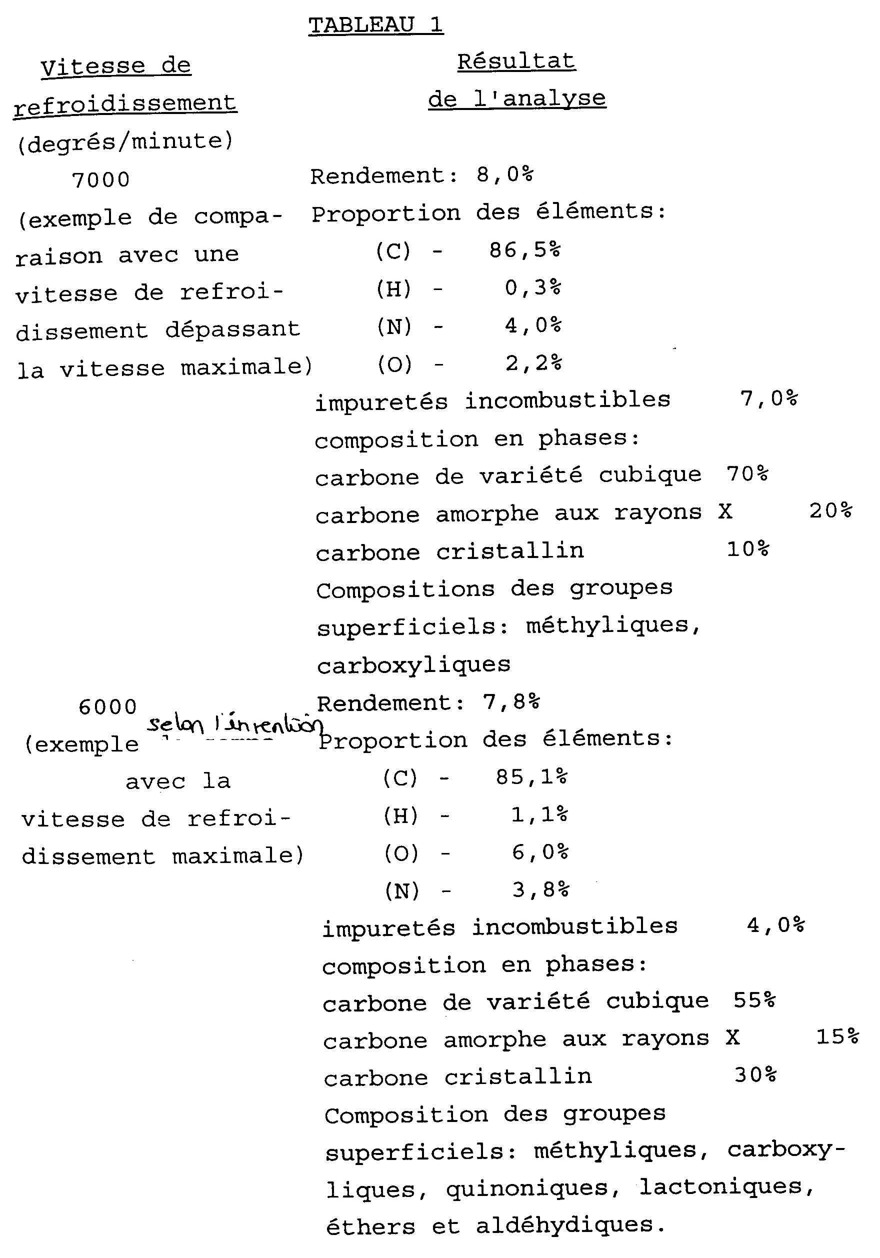

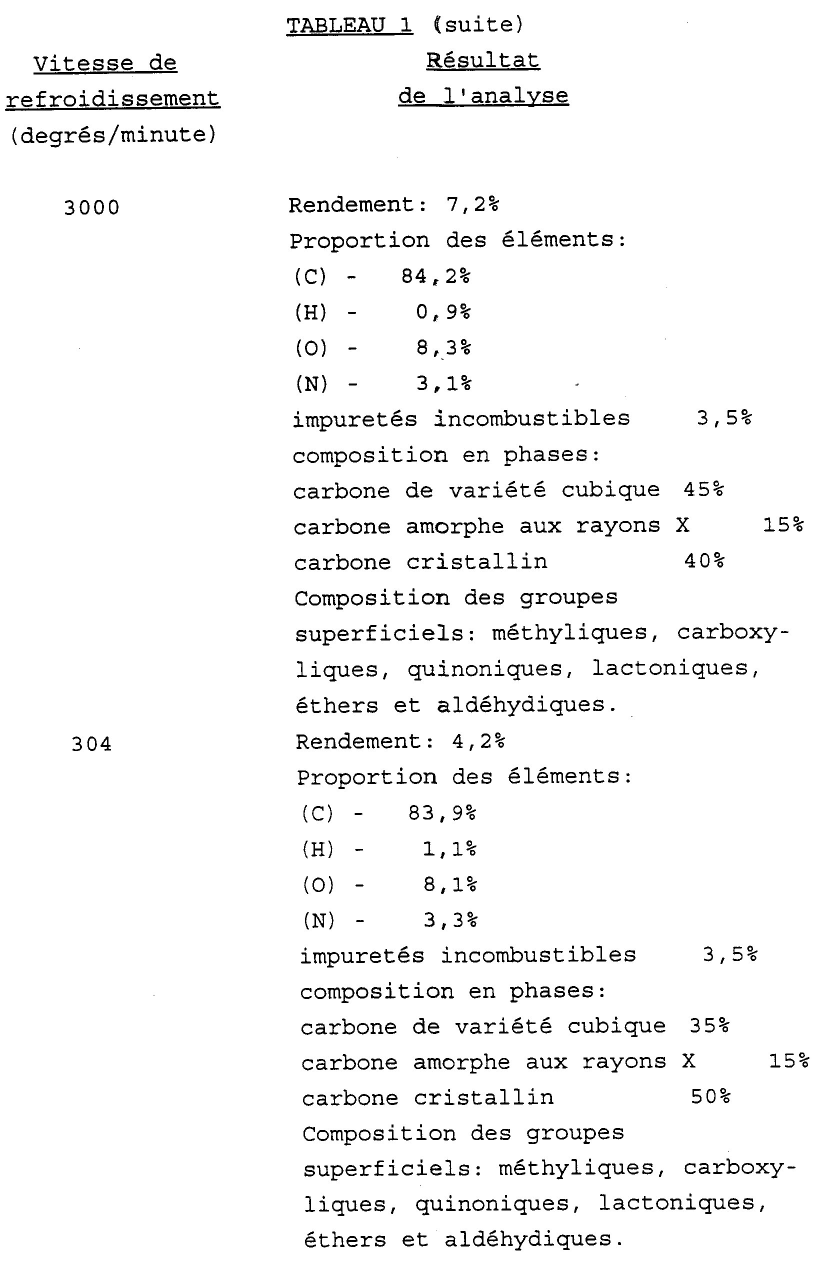

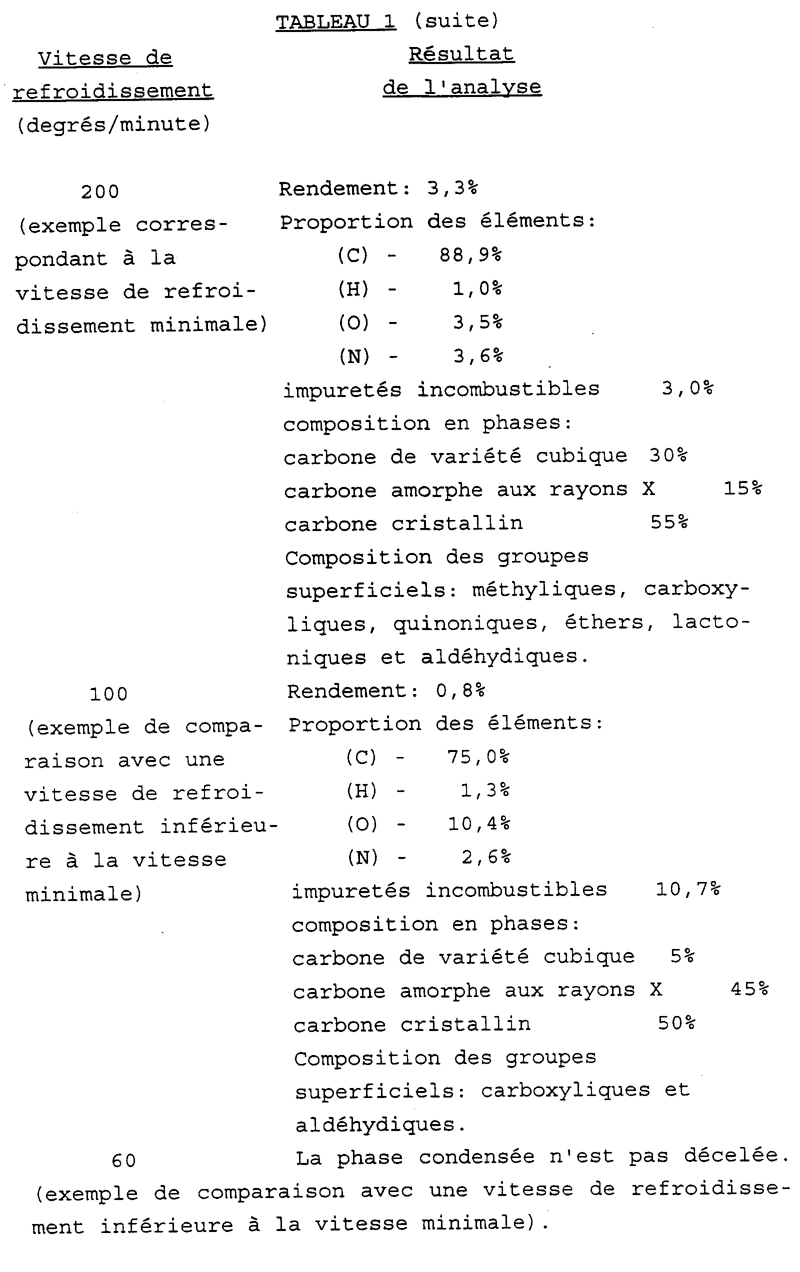

On se propose d'utiliser le matériau adamantin carboné comme constituant dans des matériaux composites, sous forme d'additif augmentant les caractéristiques physiques, mécaniques et d'exploitation des élastomères et caoutchoucs. Ainsi, par exemple, après l'introduction de 1 à 3% du matériau selon l'invention dans des élastomères très chargés, la résistance à l'abrasion augmente de 1,2 à 1,4 fois et dans les élastomères peu chargés, la résistance à l'abrasion augmente de 2 à 5 fois. Les autres indices de qualité des élastomères ne changent pas. Les essais au banc réalisés sur un lot d'articles techniques en élastomères ont montré que les pièces en élastomères très chargées telles que douilles, silentblocs, etc, supportent des sollicitations 1,3 à 2 fois supérieures à la norme et celles qui sont peu chargées supportent des sollicitations 1,3 fois supérieures aux valeurs habituelles.

L'introduction du matériau selon l'invention dans les huiles de graissage, à raison de 0,1%, a conduit aux modifications décrites ci-après.

Des essais de friction et d'usure (tribologie) réalisés avec un rouleau en acier 60XVGC venant frotter sur un coulisseau en bronze BrOf-015 ont montré que la température de l'huile est réduite de 50 degrés et que le coefficient de frottement passe de 0,6 à 0,15 (selon d'autres données, il est réduit de 1,5 à 1,8 fois), ce qui augmente de 2 à 10 fois la durée de vie à l'usure d'un couple de frottement et permet d'augmenter la charge sur le sous-ensemble de frottement de 1,5 à 7 fois. L'introduction du matériau selon l'invention dans une huile de type ISO à raison de 0,1% conduit à une réduction du coefficient de frottement de 10 fois.

Les essais industriels ont donné les résultats suivants: sur des moteurs Diesel de véhicule, l'économie en huile de graissage atteint jusqu'à 25% et l'économie en carburant jusqu'à 5%. L'utilisation dans des moteurs de véhicule à allumage commandé réduit la consommation de combustible de 2 à 3 fois.

L'introduction du matériau selon l'invention dans le polytétrafluoroéthylène (PTFE) augmente sensiblement les propriétés dudit matériau en service, comme représenté sur le tableau 2.

**TABLEAU 2**

| Matériau | Module d'élasticité en compression (MPa) | Coefficient de frottement | Résistance relative à l'usure |
|---|---|---|---|
| PTFE (polytétrafluoroéthylène) | 4,2 ± 0,1 | 0,21 | 1 |
| PTFE + 20% de coke (4K20) | 12,2 ± 0,5 | 0,32 | 25 |
| PTFE + 5% du matériau selon l'invention | 4,9 ± 20,2 | 0,21 | 68 |

Des essais industriels sur un appui coulissant utilisé sur des articles de l'industrie radiotechnique et sur des bagues d'étanchéité pour des tiges de compresseur ont montré les caractéristiques d'exploitation élevées de tels matériaux composites.

## Revendications

1. Matériau adamantin carboné contenant du carbone en phases adamantine et amorphe aux rayons X, de l'hydrogène, de l'azote et de l'oxygène, caractérisé en ce qu'il contient en plus du carbone en phase cristalline avec les proportions suivantes des phases de carbone, en % en poids:
| | |
|---|---|
| phase adamantine | 30 à 75 |
| phase amorphe aux rayons X | 10 à 15 |
| phase cristalline | complément à 100% |
et avec les propositions quantitatives suivantes des éléments, en % en poids:
| | |
|---|---|
| carbone | 84-89 |
| hydrogène | 0,3-1,1 |
| azote | 3,1-4,3 |
| oxygène | 2,0-7,1 |
| impuretés incombustibles | 2,0-5,0 |
la surface contenant des groupes fonctionnels méthyliques, carboxyliques, quinoniques, lactoniques, éthers et aldéhydiques.

2. Procédé d'obtention du matériau adamantin carboné selon la revendication 1, comprenant la détonation d'un explosif présentant un équilibre d'oxygène négatif à l'intérieur d'un volume fermé et dans une atmosphère inerte par rapport au carbone, caractérisé en ce que l'on effectue la synthèse à une vitesse de refroidissement des produits de détonation de 200 à 6000 degrés/min.

## Claims

1. An adamantine carbonaceous substance containing carbon in the adamantine and amorphous-to-X-rays phases, hydrogen, nitrogen and oxygen, characterised in that it additionally contains carbon in the crystalline phase, the proportions of the carbon phases being, in percentage by weight:
| | |
|---|---|
| adamantine phase | 30 to 75 |
| phase amorphous to X-rays | 10 to 15 |
| crystalline phase | amount to make up to 100% |
and with the following quantitative proportions of the elements, in percentage by weight:
| | |
|---|---|
| carbon | 84 to 89 |
| hydrogen | 0.3 to 1.1 |
| nitrogen | 3.1 to 4.3 |
| oxygen | 2.0 to 7.1 |
| non-combustible impurities 2.0 to 5.0 | |
the surface containing methyl, carboxylic, quinone, lactone, ether and aldehyde functional groups.

2. A method for obtaining an adamantine carbonaceous material according to claim 1, comprising detonation of an explosive having a negative oxygen equilibrium inside a closed volume and in an atmosphere that is inert with respect to carbon, characterised in that synthesis is carried out at a rate of cooling of the detonation products of 200 to 6,000 degrees/minute.

## Patentansprüche

1. Adamantin-Kohlenstoffmaterial enthaltend Kohlenstoff in der Adamantin-Phase und der gegenüber Röntgenstrahlen amorphen Phase, Wasserstoff, Stickstoff und Sauerstoff, dadurch gekennzeichnet daß es zusätzlich Kohlenstoff in kristalliner Phase in den folgenden Verhältnissen der Kohlenstoffphasen in Gew.-% enthält:
| | |
|---|---|
| Adamantinphase | 30 bis 75 |
| gegenüber Röntgenstrahlen amorphe Phase | 10 bis 15 |
| kristalline Phase | ad 100 % |
und daß es die folgenden quantitativen Verhältnisse der Elemente in Gew. -% aufweist:
| | |
|---|---|
| Kohlenstoff | 84 - 89 |
| Wasserstoff | 0,3 - 1,1 |
| Stickstoff | 3,1 - 4,3 |
| Sauerstoff | 2,0 - 7,1 |
| nicht brennbare Verunreinigungen | 2,0 - 5,0 |
wobei die Oberfläche funktionelle Methyl-, Carboxy-, Chinon-, Lacton-, Ether- und Aldehydgruppen enthält.

2. Verfahren zur Herstellung des Adamantin-Kohlenstoffmaterials nach Anspruch 1, umfassend die Detonation eines Explosivstoffs, der ein negatives Sauerstoffgleichgewicht aufweist, im Inneren eines abgeschlossenen Volumens und in einer bezogen auf Kohlenstoff inerten Atmosphäre, dadurch gekennzeichnet, daß man die Synthese mit einer Abkühlgeschwindigkeit der Detonationsprodukte von 200 bis 6000 Grad/min bewirkt.
